(19) Europäisches Patentamt
European Patent Office
Office européen des brevets

(11) Publication number : **0 408 186 B1**

(12) # EUROPEAN PATENT SPECIFICATION

(45) Date of publication of patent specification : **18.08.93 Bulletin 93/33**

(51) Int. Cl.$^5$ : **C09D 5/44,** C07C 217/48, C08G 59/50, C07D 233/16

(21) Application number : **90306198.4**

(22) Date of filing : **07.06.90**

(54) **Pigment dispersant.**

(30) Priority : **12.07.89 US 380543**

(43) Date of publication of application : **16.01.91 Bulletin 91/03**

(45) Publication of the grant of the patent : **18.08.93 Bulletin 93/33**

(84) Designated Contracting States : **AT BE CH DE DK ES FR GB GR IT LI LU NL SE**

(56) References cited :
**EP-A- 0 220 442**
**US-A- 3 896 082**
**US-A- 4 710 561**

(73) Proprietor : **IMPERIAL CHEMICAL INDUSTRIES PLC**
**Imperial Chemical House, Millbank**
**London SW1P 3JF (GB)**
Proprietor : **E.I. DU PONT DE NEMOURS AND COMPANY**
**1007 Market Street**
**Wilmington Delaware 19898 (US)**

(72) Inventor : **Peng, Stephen Chung-Suen**
**3333 Sandy Creek Drive**
**Utica, Michigan 48087 (US)**
Inventor : **Gebregiorgis, Taddesse**
**36869 Carriage Drive**
**Sterling Heights, Michigan 48310 (US)**

(74) Representative : **Johnston, Walter Paul et al**
**ICI Group Patents Services Dept. PO Box 6**
**Shire Park Bessemer Road**
**Welwyn Garden City Herts, AL7 1HD (GB)**

EP 0 408 186 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a pigment dispersant which is the reaction product of an organic monoepoxide or polyepoxide with a primary amine containing an imidazoline moiety, to a method of preparing the pigment dispersant and to a pigmented electrodepositable coating composition containing the pigment dispersant.

The coating of electrically conductive substrates by electrodeposition is a well known and important industrial process. For example, electrodeposition is widely used in the automotive industry to apply primers to automotive substrates. In this process, a conductive article is immersed as one electrode in a coating composition made from an aqueous emulsion of film-forming polymer. An electric current is passed between the article and a counter-electrode in electrical contact with the aqueous emulsion, until a desired coating is produced on the article. The article to be coated is the cathode in the electrical circuit with the counter-electrode being the anode.

Resin compositions used in cathodic electrodeposition baths are also well known in the art. These resins are typically manufactured from polyepoxide resins which have been chain extended and adducted to include a nitrogen. The nitrogen is typically introduced through reaction with an amine compound. Typically these resins are blended with a crosslinking agent and then neutralized with an acid to form an aqueous emulsion which is usually referred to as a principal emulsion.

The principal emulsion is combined with a pigment paste, coalescent solvents, water, and other additives (usually at the coating site) to form the electrodeposition bath. The electrodeposition bath is placed in an insulated tank containing the anode. The article to be coated is made the cathode and is passed through the tank containing the electrodeposition bath. The thickness of the primer coating is a function of the bath characteristics, the electrical operating characteristics, and the immersion time.

The coated article is removed from the bath after a set amount of time. The article is rinsed with deionized water and the primer coating is cured, typically in an oven at a sufficient temperature to produce crosslinking.

Cathodic electrodepositable resin compositions, coating baths, and cathodic electrodeposition processes are disclosed in United States Patent Nos. 3,922,253; 4,419,467; 4,137,140; and 4,468,307.

The pigment dispersant is a very important part of an electrocoat primer composition. The pigment dispersion process involves the separation of the primary pigment particles from their agglomerates or aggregates, the displacement of occluded air and absorbed water, and the wetting and coating of the pigment surfaces with the dispersion resin. Ideally, each primary particle, having been mechanically separated during dispersion, is also stabilized against flocculation. If the pigment particles are not properly dispersed and stabilized in the paint, the advantages built into the pigment by the manufacturer may be lost. For instance, the pigment may settle in the electrodeposition bath which can result in loss of corrosion protection of the substrate. In addition, the surface appearance and operating characteristics may be adversely affected by inadequate pigment dispersion.

The better the pigment dispersant, the less dispersant is required and thus the pigment to dispersant ratio can be increased. This can result in a saving on dispersant costs, improved processability, increased production capacity and lower volatile organic concentration (VOC) in the electrodeposition bath. Current commercial pigment dispersants used in cathodic electrocoat processes typically are polyepoxide resins containing either onium salts or amine salts. Using the pigment dispersants known in the prior art, the maximum pigment to dispersant ratio in the pigment paste (sometimes known as the 'pigment to binder ratio') that can be obtained is 3:1. These pigment dispersants also require the use of solvents which raise the VOC of the electrocoat bath. Current commercial pigment dispersants contain at least 30 to 40% solvent.

The problem is to find a pigment dispersant which will allow a maximization of the pigment to dispersant ratio, and a minimization of the amount of solvent required. This could result in a cost savings for dispersants, improved processability, and a lower VOC in the electrocoat bath.

The closest prior art that we are aware of is U.S. Patent No. 4,710,561 (hereinafter the '561 patent) assigned to Kansai. This patent discloses an imidazoline epoxy ether resin. But this resin suffers from the following problems; (1) the epoxy ether can not be made water dispersable upon protonating with an organic acid; (2) the etherification reaction is slow and results in considerable side reactions which cause a high molecular weight resin, and a high viscosity; (3) the pH is low and therefore is less desirable for cathodic electrocoating processes; and (4) poor mechanical stability.

According to the present invention there is provided a pigment dispersant comprising the reaction product of (i) an organic monoepoxide or organic polyepoxide; and (ii) an imidazoline amine compound with the structure:

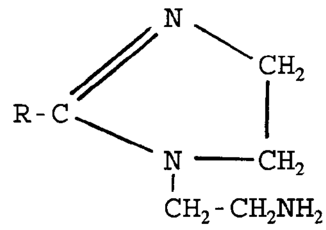

where R is $C_8$-$C_{24}$ alkyl, which are reacted stoichiometrically so that there is no excess of amine or epoxide.

It has been discovered that by using the pigment dispersant of the invention, pigment to dispersant ratios can be increased to 12:1 or more. This is a very surprising four fold improvement over the current commercial pigment dispersants which require a pigment to dispersant ratio of about 3:1. In addition, the pigment dispersant of the invention allows the minimization or elimination of the use of solvent in the pigment dispersant, which can thus be made 100% solids.

The pigment dispersant of the present invention also has the following additional properties: (1) it can be made water dispersible upon protonating with an organic acid; (2) its amination reaction is fast, resulting in little or no side reactions; (3) it has a low viscosity; (4) it has excellent mechanical stability; and (5) it can be made completely soluble in water.

The pigment dispersant of the present invention is usable in a variety of different coatings applications for example spray, dip or roller coating.

One major application of the pigment dispersant is in cathodic electrocoat systems. The description which follows is directed toward cathodic electrocoat applications of the pigment dispersant. This should not be interpreted as limiting the scope of potential applications for the dispersant.

As previously mentioned, it is well known that most principal emulsions in cathodic electrodeposition baths have a binder resin which is an epoxy amine adduct blended with a cross-linking agent and neutralized with an acid in order to get a water soluble or dispersible product. The pigment dispersant of the present invention is potentially usable with a variety of different cathodic electrocoat binder resins. The preferred binder resin is an epoxy-amine resin.

According to another aspect of the present invention there is provided a cathodic electrodepositable coating composition comprising an epoxy-amine binder resin, a pigment, and a pigment dispersant which is the reaction product of (i) an organic monoepoxide or organic polyepoxide; and (ii) an imidazoline amine compound with the structure:

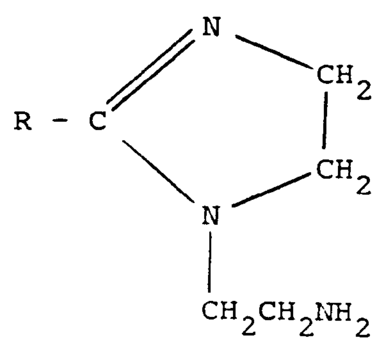

where R is $C_8$ - $C_{24}$ alkyl.

Suitable epoxy-amine adducts resins are disclosed in United States Patent No. 4,419,467 which is incorporated herein by reference.

The preferred crosslinkers for the above-mentioned binder resins are also well known in the art. They are aliphatic and aromatic isocyanates for example hexamethylene diisocyanate, toluene diisocyanate and methylene diphenyl diisocyanate. These isocyanates are pre reacted with a blocking agent such as an oxime or an alcohol which blocks the isocyanate functionality (i.e. the crosslinking functionality). Upon heating, the oxime or alcohol deblocks generating free isocyanate which in turn reacts with the hydroxy functionality of the binder resin to give crosslinking. These crosslinking agents are also disclosed in U.S. Patent No. 4,419,467.

The neutralization of the epoxy-amine resin with an acid to attain its cationic character is also well known in the art. The resulting binder (or back-bone) resin is combined with pigment paste, deionized water and additives such as anti-cratering agents and plasticizers, to form the electrocoat paint bath.

The cationic resin and the blocked isocyanate are the principal resinous ingredients in the principal emulsion and are usually present in amounts of about 30 to 50 percent by weight of solids.

Besides the resinous ingredients described above, the electrocoating compositions of the invention contain a pigment which is incorporated into the composition in the form of a paste. The pigment paste is prepared by grinding pigments into the pigment dispersant resin of the present invention along with optional additives such as wetting agents, surfactants, and defoamers. Pigment dispersants are well known in the art. After grinding, the particle size of the pigment should be as small as practical, a Hegman grinding gauge of about 6 to 8 is usually employed.

Pigments which can be employed in the practice of the invention include titanium dioxide, basic lead silicate, strontium chromate, carbon black, iron oxide and clay. These are the pigments typically used in automotive primers.

The pigment dispersant of the invention is the reaction product of an organic monoepoxide or polyepoxide with an imidazoline amine compound which contains a primary amine and an imidazoline moiety.

The imidazoline amine compound is made by reacting carboxylic acids of the formula:

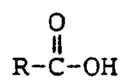

where R is defined as above with diethylenetriamine. The carboxylic acid is added slowly to the diethylenetriamine in the presence of a solvent to generate heat of neutralization. After heat of neutralization, the mixture is then heated under reflux to 150-160°C until the water of condensation is completely removed. The solvent is then removed under reduced pressure to give the final product which is the imidazoline amine.

This imidazoline amine can then be reacted with potentially any monoepoxide or polyepoxide. Examples of monoepoxides include aliphatic monoepoxides, aromatic monoepoxides and cyloaliphatic monoepoxides. Monoepoxides are available commercially from Shell Chemical Company under the trade name Cardura E and from Ciba Geigy Chemical Company under the trade name Araldite ('Cardura' and 'Araldite' are trademarks). Our preferred monoepoxide has the formula:

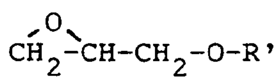

where R' is $C_{12}$-$C_{14}$ alkyl. It is available from Ciba Geigy Chemical Company under the trade name Araldite DY025. The reaction product of the imidazoline amine and the Araldite DY025 has the following formula:

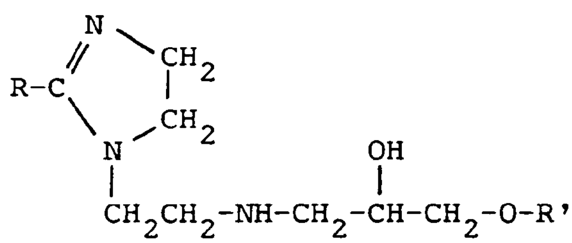

where R and R' are defined as above.

It is also possible to react the imidazoline amine compound with polyepoxide resins. These polyepoxide resins can be aromatic, aliphatic or cycloaliphatic. The polyepoxide resins which can be used in making the pigment dispersants of the invention are also well known in the art. They are monomeric or polymeric resinous materials containing two or more 1,2-epoxy groups per molecule. The preferred polyepoxides are polyglycidyl ethers of polyhydric phenols such as bisphenol A. These can be produced by etherification of a polyphenol with an epihalohydrin or dihalohydrin such as epichlorohydrin or dichlorohydrin in the presence of alkali. These polyepoxides are available from Shell Chemical Company under the trade name Epon, Dow Chemical Company under the trade name DER, or Ciba Geigy Chemical Corporation under the trade name Araldite ('Epon' and 'DER' are Trademarks).

Besides polyhydric phenols, other cyclic polyols can also be used in preparing the polyglycidyl ethers of cyclic polyol derivatives. Examples of other cyclic polyols are alicyclic polyols, particularly cycloaliphatic polyols, for example 1,2-cyclohexanediol, 1,4-cyclohexanediol, 1,2-bis(hydroxymethyl)cyclohexane, 1,3-bis(hydroxymethyl)cyclohexane, and hydrogenated bisphenol A.

Examples of other polyepoxides are polyglycidyl ethers of polyhydric alcohols, such as ethylene glycol, diethylene glycol, triethylene glycol, 1,2-propylene glycol, 1,3-propylene glycol, 1,4-butylene glycol and 1,5-pentanediol.

Another polyepoxide which can be used in making the pigment dispersant of the invention is a polyglycidyl ether of polyhydric phenol polyalkoxylate.

According to a further aspect of the invention there is provided a process for preparing an imidazoline amine epoxide pigment dispersant which comprises reacting (i) an organic monoepoxide or organic polyepoxide with (ii) an imidazoline amine compound with the structure:

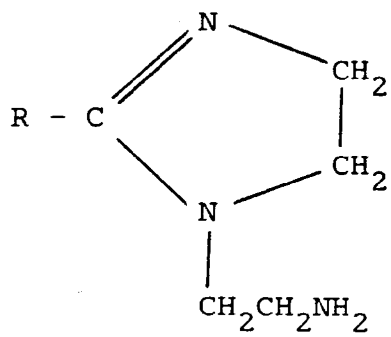

in which R is $C_8$ to $C_{24}$ alkyl.

It is important to react the imidazoline amine compound and the monoepoxide or polyepoxide stoichiometrically so that there is no excess amine or epoxide. If there is excess imidazoline amine, the dispersant contains unreacted imidazoline amine which makes the final coating water sensitive and results in physical defects such as pinholing. If there is excess epoxide then the reaction will lead to high viscosity or even gellation.

The reaction between the imidazoline amine compound and the epoxide takes place by bringing the two into contact at room temperature and then raising the temperature to about 80°C and allowing the reaction to exotherm to about 95°C. The reaction is then held at this temperature until the epoxy equivalent weight approaches infinity. This normally takes about 2 hours.

Reacting the imidazoline amine compound and epoxide under the reaction conditions described above gives a reaction product with the following characteristics: (1) it can be made water dispersible upon protonating with an organic acid; (2) its amination reaction is fast, resulting in little or no side reactions; (3) it has a low viscosity; (4) it has excellent mechanical stability; and (5) it can be made completely soluble in water.

This product is then neutralized with acid in order to obtain a water soluble product. The preferred neutralization acid is lactic acid.

The pigment-to-resin weight ratio in the electrocoat paint bath is very important and should be preferably less than 50:100, more preferably less than 40:100, and usually about 20 to 40:100. Higher pigment-to-resin solids weight ratios have also been found to adversely affect coalescence and flow.

The coating compositions of the invention can contain optional ingredients such as wetting agents, surfactants, plasticisers and defoamers.

Examples of surfactants and wetting agents include alkyl imidazolines such as those available from Ciba-Geigy Industrial Chemicals as Amine C and acetylenic alcohols available from Air Products and Chemicals as Surfynol 104 A. These optional ingredients, when present, constitute from about 0 to percent by weight of resin solids.

Plasticizers are optional ingredients which promote flow. Examples are high boiling water immiscible materials such as ethylene or propylene oxide adducts of nonyl phenols or bisphenol A. Plasticizers can be used at levels of about 0 to 15 percent by weight resin solids.

Curing catalysts such as tin catalysts are usually present in the composition. Examples are dibutyltin dilaurate and dibutyltin oxide. When used, they are typically present in amounts of about 0.05 to 2 percent by weight tin based on weight of total resin solids.

The electrodepositable coating compositions of the present invention are dispersed in aqueous media. The term "dispersion" as used in the context of the present invention is believed to be a two-phase translucent or opaque aqueous resinous system in which the resin is in the dispersed phase and water the continuous phase. The average particle size diameter of the resinous phase is about 0.1 to 10 microns, preferably less than 5 microns. The concentration of the resinous products in the aqueous medium is, in general, not critical, but ordinarily the major portion of the aqueous dispersion is water. The aqueous dispersion usually contains from about 3 to 50 percent preferrably 5 to 40 percent by weight resin solids. Aqueous resin concentrates which are to be further diluted with water, generally range from 10 to percent by total weight solids.

Besides water, the aqueous medium may also contain a coalescing solvent. Useful coalescing solvents include hydrocarbons, alcohols, esters, ethers and ketones. The preferred coalescing solvents include alcohols, polyols and ketones. Specific coalescing solvents include monobutyl and monohexyl ethers of ethylene glycol, and phenyl ether of propylene glycol. The amount of coalescing solvent is not unduly critical and is generally between about 0 to 15 percent by weight, preferably about 0.5 to 5 percent by weight based on total weight of the resin solids.

EXAMPLES

The following examples all disclose the preparation of pigment dispersants and cathodic electrocoat baths made from such dispersants. In all the following examples the imidazoline amine compound which is the precursor to the pigment dispersant has the following formula:

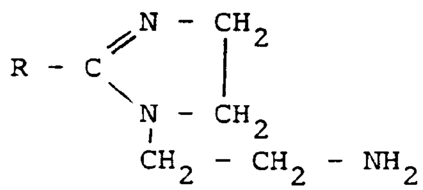

where R is $C_{12}$-$C_{16}$. This compound is hereinafter referred to as the "imidazoline amine" and is made as described supra page 12.

The resinous binder that was used in all the following examples is a basic epoxy-amine adduct blended with a blocked isocyanate crosslinker and neutralized with an acid. These cathodic electrodepositable resins are well known in the prior art. The particular resin used in our examples is disclosed in U.S. Patent No.4,419,467 which is incorporated herein by reference. This neutralized epoxy-amine resin will be referred to hereinafter as the '467 binder resin.

EXAMPLE 1

a) Preparation of monoepoxide-imidazoline amine dispersant

This adduct was prepared from the following ingredients.

| Ingredients | Grams | Solids |
|---|---|---|
| Epoxy No 8 | 2000 | 2000 |
| (monoepoxide from Ciba Chemicals) | | |
| Imidazoline amine | 1874 | 1874 |
| (described above) | | |

The Epoxy No 8 and imidazoline amine were charged to a reaction kettle and heated with a nitrogen sparge to 65°C to initiate an exotherm with a peak temperature of 95°C. The reaction mixture was held at 95°C until an epoxy equivalent weight approaching infinity was obtained. The reaction product had a solids content of 100%. The amine equivalent weight of this product was 291.6 (theoretical 290.9).

b) Neutralization of the monoepoxide-imidazoline amine dispersant

776g of the monoepoxide-imidazoline dispersant (from (a) above) and 191g of 88% lactic acid were charged to a reaction kettle and heated to 38°C. The mixture was allowed to exotherm to 50°C. At 50°C, 2913g of deionized water was added slowly to disperse the resin. The reaction mixture was then held at 50°C for 60

minutes (to hydrolyze the imidazoline ring). The dispersed resin had a 20% resin solids and a pH of 6.80.

c) Preparation of pigment paste from the neutralized monoepoxide-imidazoline amine dispersant

To prepare a pigment paste for this neutralized cationic pigment dispersant, the following ingredients were employed.

| | Ingredients | Grams | Solids |
|---|---|---|---|
| 1. | Neutralized resin (as described in (b) above) | 192.3 | 38.46 |
| 2. | Surfynol 104A (defoamer from Air Products) | 1.92 | |
| 3. | Clay | 57.97 | 57.97 |
| 4. | Lead Silicate | 24.88 | 24.88 |
| 5. | Carbon black | 29.08 | 29.08 |
| 6. | $TiO_2$ | 331.39 | 331.39 |
| 7. | Dibutyltin oxide | 18.28 | 18.28 |
| 8. | Deionized water | 244.18 | |

Ingredients 1-8 were blended together in a stainless steel beaker, grinding medium was then added and the resultant slurry ground to a Hegman No. 7 to 7½. The paste had a 58% solids content and a pH of 6.86. The pigment to binder ratio was 12:1.

d) Preparation of coating composition from pigment paste

A cationic electrodepositable paint was prepared from the '467 binder resin and the pigment paste described in (c) above.

| Ingredients | Grams | Solids |
|---|---|---|
| '467 binder resin | 415.5 | 147.5 |
| Pigment paste (as described in (c) above) | 56.3 | 32.5 |
| Deionized water | 428.2 | |

To the 415.5g of '467 binder resin, 428.2g deionized water was added followed by 56.3g of the pigment paste. This electrodeposition bath had a pH of 6.48, had a solids content of 20% and a pigment to binder ratio of 0.2:1.0. Phosphated and base steel panels were coated at 225V for 135 seconds at a bath temperature of 28°C. The wet film was baked at 185°C for 30 minutes to produce dry, smooth films having a film thickness of 29 ± 0.75μ. The cured film withstood 200 methyl ethyl ketone (MEK) double rubs.

EXAMPLE 2

a) Preparation of polyepoxide-imidazoline amine dispersant

An Epon 828/Bisphenol A/Imidazoline Amine dispersant was prepared from the following ingredients.

| Ingredients | Grams | Solids |
|---|---|---|
| Epon 828 | 288 | 279.4 |
| Bisphenol A | 114 | 114 |
| Shell Catalyst 1201 | 0.288 | |
| Butyl Cellosolve | 371.5 | |
| Imidazoline-Amine | 132 | 132 |
| ('Epon' is a Trademark) | | |

The Epon 828, bisphenol A and Shell Catalyst 1201 (an ethyltriphenyl phosphonium iodide catalyst available from Shell Chemicals) were charged to a reaction kettle and heated with a nitrogen sparge to 145°C to initiate an exotherm with a peak temperature of 195°C. The reaction mixture was held at 175°C until an epoxy equivalent weight of 800 was obtained. The reaction mixture was then cooled to 150°C, followed by thinning with Butyl Cellosolve (Butyl Cellosolve is a Trademark) and cooling to 95°C. The imidazoline amine was then added (all at once) and the reaction mixture was held at a temperature of 95°C for about two hours (or until the epoxy equivalent weight approached infinity) followed by cooling to room temperature. The reaction product had a solids content of 58%.

b) Neutralization of polyepoxide-imidazoline amine dispersant

200g of the polyepoxide-imidazoline amine dispersant (described in (a) above) and 14.5g of 88% lactic acid were charged to a reaction vessel and heated to about 38°C. The mixture was allowed to exotherm to about 50°C. 365.5g of deionized water was added slowly and the dispersed resin was held at 50°C for 60 minutes. The neutralized resin solution had a solids content of 20% and a pH of 7.18.

c) Preparation of pigment paste from neutralized polyepoxide-imidazoline amine dispersant

A pigment paste using the neutralized polyepoxide-imidazoline amine dispersant described above was prepared from the following ingredients.

| Ingredients | Grams | Solids |
|---|---|---|
| Neutralized resin (as described in (b) above) | 624 | 125 |
| Surfynol 104 (defoamer) | 6.25 | |
| Clay | 47.10 | 47.10 |
| Lead silicate | 20.21 | 20.21 |
| Carbon black | 23.63 | 23.63 |
| $TiO_2$ | 269.25 | 269.25 |
| Dibutyltin oxide | 14.85 | 24.85 |
| Deionized water | 37.10 | |

The ingredients above were ground in zirconium media to a Hegman No. 7 to $7\frac{1}{4}$. The paste had a 47.9% solids and a pH of 7.11. The pigment to binder ratio was 3:1.

d) Preparation of coating composition from pigment paste

A cationic electrodepositable paint was prepared by using the '467 binder resin and the pigment paste (described in (c) above) as follows:

| Ingredients | Grams | Solids |
|---|---|---|
| '467 binder resin | 1622.25 | 575.9 |
| Pigment paste (described in (c) above) | 342.5 | 164.1 |
| Deionized water | 1735.25 | |

The resulting electrodeposition bath showed a pH of 6.10, had a solids content of 20% and pigment to binder ratio of 0.2/1.0.

Phosphated and bare steel panels were electrodeposited in this electrodeposition bath at 340 volts for 135 seconds at a bath temperature of 30°C. The wet films were baked at 185°C for 30 minutes to produce dry, smooth films having a film thickness of 17.5μ and 20μ, respectively. The cured film withstood 200 MEK double rubs.

EXAMPLE 3

a) Preparation of an epoxide-imidazoline amine dispersant

A Ciba XB 4122-Imidazoline amine dispersant was prepared from the following ingredients:

| Ingredients | Grams | Solids |
|---|---|---|
| Ciba XB 4122 | 1067 | 1067 |
| Imidazoline amine | 865.1 | 865.1 |
| Butyl Cellosolve | 480.2 | |

The Ciba XB 4122 (a diepoxide available from Ciba Geigy Chemical Company) and the imidazoline amine were charged to a reaction kettle and heated with a nitrogen sparge to 65°C to initiate an exotherm with a peak temperature of 95°C. The reaction mixture was held at 95°C for about 2 hours (or until the epoxy equivalent weight approached infinity), followed by thinning with Butyl Cellosolve to 80% solids.

b) Neutralization of the dispersant

200g of the dispersant (described in (a) above) and 36.6g of 88% lactic acid were charged to a reaction vessel and heated to 38°C. The batch was allowed to exotherm to 50°C. At 50°C, 563.4g of deionized water was added slowly to disperse the resin. The reaction mixture was held at 50°C for about 60 minutes. The dispersed resin had a 20% resin solids and a pH of 7.45.

c) Preparation of the pigment paste from the neutralized dispersant

A pigment paste using the neutralized pigment dispersant described in (b) above was prepared from the following ingredients:

| Ingredients | Grams | Solids |
|---|---|---|
| Neutralized dispersant from (b) | 192.3 | 38.46 |
| Surfynol 104 | 1.92 | |
| Clay | 57.97 | 57.97 |

| | | |
|---|---|---|
| Lead silicate | 24.88 | 24.88 |
| Carbon black | 29.08 | 29.08 |
| $TiO_2$ | 331.40 | 331.39 |
| Dibutyltin oxide | 18.28 | 18.28 |
| Deionized water | 244.20 | |

The ingredients were ground in zirconium media to a Hegman No. 7 to 7 1/4. The paste had a 54.1% solids and a pH of 7.77. The pigment to binder ratio was 12:1.

d) Preparation of a coating composition from the pigment paste

A cationic electrodepositable paint was prepared from the pigment paste (described in (c) above) and the '467 binder resin as follows:

| Ingredients | Grams | Solids |
|---|---|---|
| '467 binder resin | 923.38 | 327.8 |
| Pigment Paste (from (c) above) | 133.5 | 72.2 |
| Deionized Water | 943.12 | |

The above ingredients were mixed and the resulting electrodeposition bath showed a pH of 5.84, had a solids content of 20% and pigment to binder ratio of 0.2:1.0.

Phosphated panels were electrodeposited in this paint at 340 volts for 135s at a bath temperature of 30°C. The coated panels were cured at 185°C for 30 minutes to produce dry, smooth films having a film thickness of 17µ. The cured film withstood 200 MEK double rubs.

EXAMPLE 4

a) Preparation of epoxide-imidazoline amine dispersant

A Dow XU 71832-Imidazoline amine dispersant resin was prepared from the following ingredients:

| Ingredients | Grams | Solids |
|---|---|---|
| Dow XU 71832 | 1400 | 1400 |
| Imidazoline-amine | 1116 | 1116 |

The Dow XU 71832 (a polyepoxide available from Dow Chemical Company) and the imidazoline amine were charged to a reaction vessel and heated with a nitrogen sparge to 65°C to initiate an exotherm with a peak temperature of 95°C. The reaction mixture was held at 95°C for about 2 hours (or until an epoxy equivalent weight approaching infinity is obtained). The reaction product had a solids content of 100%.

b) Neutralization of the dispersant

200g of the dispersant (described in (a) above) and 44.7g of 88% lactic acid were charged to a reaction vessel and heated to 38°C. The batch was allowed to exotherm to 50°C. At 50°C, 755.3g of deionized water was added slowly to disperse the resin. The reaction mixture was held at 50°C for 60 minutes. The dispersed resin had a 20% resin solids and a pH of 7.55.

c) Preparation of a pigment paste from the neutralized dispersant

A pigment paste using the neutralized pigment dispersant described in (b) above was prepared from the following ingredients.

| Ingredients | Grams | Solids |
|---|---|---|
| Neutralized dispersant from (b) | 192.3 | 38.5 |
| Surfynol 104 | 1.92 | |
| Clay | 57.97 | 57.97 |
| Lead silicate | 24.88 | 24.88 |
| Carbon black | 29.08 | 29.08 |
| $TiO_2$ | 331.40 | 331.40 |
| Dibutyltin oxide | 18.28 | 18.28 |
| Deionized water | 244.20 | |

The ingredients were ground in a zirconium media to a Hegman No. of 7 to $7\frac{1}{4}$. The paste had a 54.1% solids and a pH of 7.77. The pigment to binder ratio was 12:1.

d) Preparation of a coating from the pigment paste

A cationic electrodepositable paint was prepared by using the pigment paste (described in (c) above) and the '467 binder resin as follows:

| Ingredients | Grams | Solids |
|---|---|---|
| '467 binder resin | 923.38 | 327.8 |
| Pigment Paste (from (c) above) | 133.5 | 72.2 |
| Deionized Water | 943.12 | |

The ingredients were mixed and the resulting electrodeposition bath showed a pH of 5.84, had a solids content of 20% and pigment to binder ratio of 0.2:1.0.

Phosphated panels were electrodeposited in this paint at 340 volts for 135s at a bath temperature of 30°C. The coated panels were cured at 185°C for 30 minutes to produce dry, smooth films having a film thickness of 17μ. The cured film withstood 200 MEK double rubs.

EXAMPLE 5

a) Preparation of Epon 828 - Imidazoline Adduct Adduct

This dispersant was prepared from the following ingredients:

| Ingredients | Grams | Solids |
|---|---|---|
| Epon 828 | 600 | 578 |
| Imidazoline Amine | 828 | |
| Butyl Cellosolve | 357 | |

The Epon 828, Imidazoline amine and Butyl Cellusolve were charged to a reaction kettle and heated with a nitrogen sparge to 65°C to initiate an exotherm with a peak temperature of 95°C. The reaction mixture was held at 95°C until an epoxy equivalent weight approaching infinity was obtained. The reaction product had a solids content of 80%.

b) Neutralization of Epon 828 - Imidazoline Amine Dispersant

500g of the Epon 828 - Imidazoline amine dispersant (described in (a) above), 109.9g of 88% lactic acid were charged to a reaction vessel and heated to about 38°C. The mixture was allowed to exotherm to about 50°C. 357g of deionized water was added slowly and the dispersed resin was held at 50°C for 60 mins. The neutralized resin solution had a solids content of 25% and a pH of 7.18.

c) Preparation of a pigment paste from neutralized Epon 828 - Imidazoline Amine dispersant

A pigment paste using the neutralized Epon 828 - Imidazoline amine dispersant described in (b) above was prepared from the following ingredients:

| Ingredients | Grams | Solids |
|---|---|---|
| Neutralized resin (as described in (b) above) | 152 | 38 |
| Surfynol 104 | 2.0 | |
| Clay | 58 | 58 |
| Lead silicate | 25 | 25 |
| $TiO_2$ | 332 | 332 |
| Dibutyl tin oxide | 18 | 18 |
| Deionized water | 414 | |

The ingredients above were ground in Zirconium media to a Hegman No. 7 to 7 1/4. The paste has a 56% solids content and a pH of 7.3. The pigment to binder ratio was 12:1.

d) Preparation of coating composition from pigment paste

A cationic electrodepositable paint was prepared by using the '467 binder resin and the pigment paste (described in (c) above) as follows:

| Ingredients | Grams | Solids |
|---|---|---|
| '467 binder resin | 1154.20 | 409.73 |
| pigment paste (described above) | 161.20 | 90.27 |
| Deionized water | 1185 | |

The resulting electrodeposition bath showed a pH of 6.33, had a solids content of 20% and a pigment to binder ratio of 0.20:1.0.

Phosphated and base steel panels were electrodeposited in this electrodeposition bath at 175 volts for 135s at a bath temperature of 28°C. The wet films were baked at 177°C for 30 minutes to produce dry smooth films having a film thickness of 25µ. The cured film withstood 200 MEK double rubs.

## Claims

1. A pigment dispersant comprising the reaction product of (i) an organic monoepoxide or organic polyepoxide; and (ii) an imidazoline amine compound with the structure:

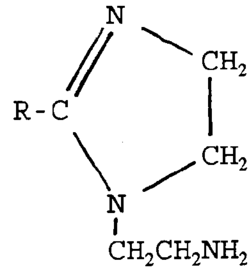

where R is $C_8C\text{-}_{24}$ alkyl,
which are reacted stoichiometrically so that there is no excess of amine or epoxide.

2. A pigment dispersant of as claimed in Claim 1 in which the organic monoepoxide has the formula:

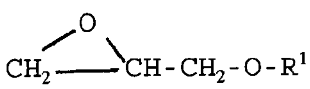

where $R^1$ is $C_{12}$-$C_{14}$ alkyl.

3. A pigment dispersant as claimed in Claim 1 in which the organic polyepoxide is a monomeric or polymeric resinous material containing two or more 1,2 epoxy groups per molecule.

4. A pigment dispersant as claimed in Claim 3 in which organic polyepoxide is a polyglycidyl ether of a polyhydric phenol.

5. The pigment dispersant as claimed in Claim 3 in which the organic polyepoxide is a polyglycidyl ether of an alicyclic polyol.

6. A pigment dispersant as claimed in Claim 3 in which the organic polyepoxide is a polyglycidyl ether of a polyhydric alcohol.

7. A pigment dispersant as claimed in Claim 3 in which the organic polyepoxide is a polyglycidyl ether of a polyhydric phenol polyalkoxylate.

8. A pigment dispersant as claimed in any one of Claims 1 to 7 in which the pigment dispersant contains no solvents and thus is 100% solids.

9. A cathodic electrodepositable coating composition comprising an epoxy-amine binder resin, a pigment, and a pigment dispersant as claimed in Claim 1.

10. A composition as claimed in Claim 9 in which the pigment to pigment dispersant ratio is 12:1 or more.

11. A process for preparing an imidazoline amine epoxide pigment dispersant which comprises reacting
(i) an organic monoepoxide or organic polyepoxide with
(ii) an imidazoline amine compound with the structure

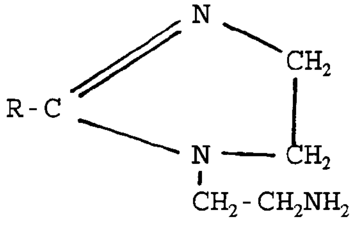

in which R is $C_8$ to $C_{24}$ alkyl, stoichiometrically so that there is no excess of amine or epoxide.

## Patentansprüche

1. Pigmentdispergiermittel, welches das Reaktionsprodukt aus (i) einem organischen Monoepoxid oder einem organischen Polyepoxid und (ii) einer Imidazolinamin-Verbindung der Struktur,

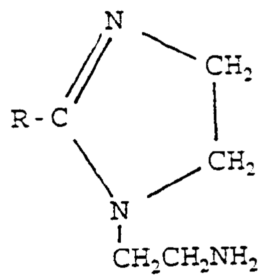

worin R für $C_{8-24}$-Alkyl steht, enthält, wobei bei deren Umsetzung stöchiometrische Verhältnisse verwendet worden sind, so daß kein Überschuß an Amin oder Epoxid vorliegt.

2. Pigmentdispergiermittel nach Anspruch 1, bei welchem das organisch Monoepoxid die Formel,

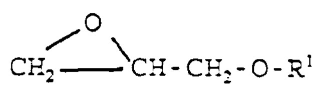

worin $R^1$ für $C_{12-14}$-Alkyl steht, aufweist.

3. Pigmentdispergiermittel nach Anspruch 1, in welchem das organische Polyepoxid ein monomeres oder polymeres Harzmaterial mit zwei oder mehr 1,2-Epoxy-Gruppen je Molekül ist.

4. Pigmentdispergiermittel nach Anspruch 3, in welchem das organische Polyepoxid ein Polyglycidylether eines mehrwertigen Phenols ist.

5. Pigmentdispergiermittel nach Anspruch 3, in welchem das organische Polyepoxid ein Polyglycidylether eines alicyclischen Polyols ist.

6. Pigmentdispergiermittel nach Anspruch 3, in welchem das organische Polyepoxid ein Polyglycidylether eines mehrwertigen Alkohols ist.

7. Pigmentdispergiermittel nach Anspruch 3, in welchem das organische Polyepoxid ein Polyglycidylether eines mehrwertigen Phenol-polyalkoxylats ist.

8. Pigmentdispergiermittel nach einem der Ansprüche 1 bis 7, welches keine Lösungsmittel enthält und somit zu 100 % aus Feststoffen besteht.

9. Kathodische elektrisch abscheidbare Beschichtungszusammensetzung, die ein Epoxyamin-Binderharz, ein Pigment und ein Pigmentdispergiermittel nach Anspruch 1 enthält.

10. Zusammensetzung nach Anspruch 9, in welcher das Verhältnis von Pigment zu Pigmentdispergiermittel 12:1 oder mehr beträgt.

11. Verfahren zur Herstellung eines Imidazolinamin/Epoxid-Pigmentdispergiermittels, bei welchem
   (i) ein organisches Monoepoxid oder ein organisches Polyepoxid mit
   (ii) einer Imidazolinamin-Verbindung der Struktur,

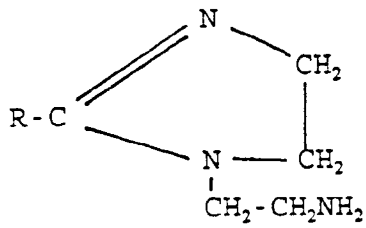

worin R für $C_{8-24}$-Alkyl steht, stöchiometrisch umgesetzt wird, so daß kein Überschuß an Amin oder Epoxid vorliegt.

## Revendications

1. Dispersant pour pigment comprenant le produit de réaction (i) d'un monoépoxyde organique ou d'un polyépoxyde organique ; et (ii) d'un composé aminé d'imidazoline de formule :

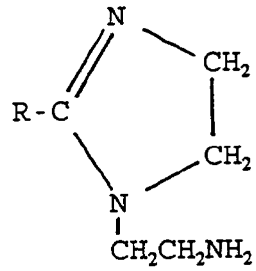

dans laquelle R est un groupe alkyle en $C_8$ à $C_{24}$, que l'on fait réagir stoechiométriquement de manière qu'il n'y ait pas d'excès d'amine ou d'époxyde.

2. Dispersant pour pigment suivant la revendication 1, dans lequel le monoépoxyde organique répond à la formule :

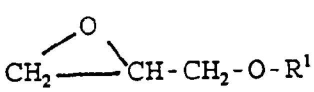

dans laquelle $R^1$ est un groupe alkyle en $C_{12}$ à $C_{14}$.

3. Dispersant de pigment suivant la revendication 1, dans lequel le polyépoxyde organique est une matière résineuse monomérique ou polymérique contenant deux ou plus de deux groupes 1,2 -époxy par molcule.

4. Dispersant pour pigment suivant la revendication 3, dans lequel le polyépoxyde organique est un éther de polyglycidyle d'un phénol polyhydroxylique.

5. Dispersant pour pigment suivant la revendication 3, dans lequel le polyépoxyde organique est un éther de polyglycidyle d'un polyol alicyclique.

6. Dispersant pour pigment suivant la revendication 3, dans lequel le polyépoxyde organique est un éther de polyglycidyle d'alcool polyhydroxylique.

7. Dispersant pour pigment suivant la revendication 3, dans lequel le polyépoxyde organique est un éther de polyglycidyle d'un polyalkoxylate de phénol polyhydroxylique.

8. Dispersant pour pigment suivant l'une quelconque des revendications 1 à 7, qui ne contient pas de solvants et qui est par conséquent à 100 % de matières solides.

9. Composition de revêtement par électrodéposition cathodique, comprenant comme liant une résine époxy-amine, un pigment et un dispersant pour pigment suivant la revendication 1.

**10.** Composition suivant la revendication 9, dans laquelle le rapport du pigment au dispersant pour pigment a une valeur égale ou supérieure à 12:1.

**11.** Procédé de production d'un dispersant pour pigment à base d'époxyde d'imidazoline aminé, qui comprend la réaction

(i) d'un monoépoxyde organique ou d'un polyépoxyde organique

avec

(ii) un composé aminé d'imidazoline de formule

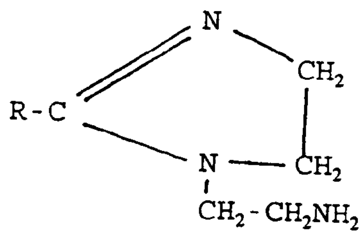

dans laquelle R est un groupe alkyle en $C_1$ à $C_{24}$, dans des proportions stoechiométriques de manière qu'il n'y ait pas d'excès d'amine ou d'époxyde.